## Europäisches Patentamt

## European Patent Office

## Office européen des brevets

(19)

(11) Veröffentlichungsnummer: **0 040 593**

**A1**

(12)

# EUROPÄISCHE PATENTANMELDUNG

(21) Anmeldenummer: 81890079.7

(22) Anmeldetag: 15.05.81

(51) Int. Cl.³: **F 04 B 49/02**
**F 16 K 31/365**

(30) Priorität: 16.05.80 AT 2645/80

(43) Veröffentlichungstag der Anmeldung:
25.11.81 Patentblatt 81/47

(84) Benannte Vertragsstaaten:
BE DE FR GB IT SE

(71) Anmelder: HOERBIGER VENTILWERKE
AKTIENGESELLSCHAFT
Braunhubergasse 23
A-1110 Wien(AT)

(72) Erfinder: Bauer, Friedrich, Dipl. Ing. Dr.
Endresstrasse 92
A-1230 Wien(AT)

(74) Vertreter: Klein, Adam, Dipl.Ing.
Patentanwalt Dipl.Ing. Adam Klein Fasangasse 49
A-1030 Wien(AT)

(54) Anordnung zur selbsttätigen Druckentlastung von Verdichtern.

(57) Die Anordnung besteht aus einem in die Förderleitung (3) des Verdichters (1) eingebauten Rückschlagventil (5) und einem Druckentlastungsventil (6), dessen Verschlußkörper (9) einen Entlastungskanal (10) steuert und durch eine Membrane (11) betätigt ist. Die Membrane ist in Schließrichtung des Druckentlastungsventils von dem in Förderrichtung vor dem Rückschlagventil herrschenden Druck und in Öffnungsrichtung von dem hinter dem Rückschlagventil herrschenden Druck beaufschalgt. Das Druckentlastungsventil wird also von der durch den Druckabfall am Rückschlagventil entstehenden Druckdifferenz geschlossen gehalten und öffnet sich, sobald die Förderung aufhört und mit dieser der Druckabfall wegfällt.

FIG.2

HOERBIGER VENTILWERKE AKTIENGESELLSCHAFT
in Wien


Anordnung zur selbsttätigen Druckentlastung
von Verdichtern


Die Erfindung bezieht sich auf eine Anordnung zur
selbsttätigen Druckentlastung von Verdichtern, die das verdichtete Medium über eine Druckleitung fördern, in die ein
Rückschlagventil eingebaut ist, dem ein selbsttätiges Druckentlastungsventil zugeordnet ist, das beim Aufhören der
Förderung die in Förderrichtung vor dem Rückschlagventil
liegende Druckleitung mit einem Entlastungskanal verbindet.

Aus der AT-PS 333 408 ist eine Ausführung dieser Art
bekannt, bei der das Rückschlagventil und das Druckentlastungsventil in einem gemeinsamen Gehäuse zusammengebaut sind. Das
Rückschlagventil besteht aus einem in einer Zylinderbohrung
verschiebbaren Kolben, der zugleich einen von der Zylinderbohrung radial abzweigenden Entlastungskanal steuert. Dieses
Druckentlastungsventil zeichnet sich durch große Einfachheit
aus und bewirkt sogleich nach Aufhören der Förderung eine
Druckentlastung des Verdichters. In der Praxis hat sich jedoch gezeigt, daß es unter bestimmten Betriebsverhältnissen
zu Verschmutzungen kommen kann, welche die Funktion des
Druckentlastungsventils beeinträchtigen. Insbesondere kann
bei der Anwendung für geschmierte Verdichter und bei hohen
Betriebstemperaturen Ölkoksbildung auftreten, die eine
Reinigung des Ventils in kurzen Zeitabständen erforderlich
macht.

Es sind ferner sogenannte Druckschalter als Entlastungsventile bekannt, die über eine Membran betätigt
werden, die in einer Richtung vom Mediumsdruck beaufschlagt
und in der anderen Richtung durch eine Feder belastet ist.
Durch Einstellen der Federspannung kann der Ansprechdruck
des Schalters gewählt werden. Die Aufgabe dieser Druckschalter
besteht darin, bei Erreichen eines bestimmten Druckes in einem
Druckmittelbehälter den Verdichter abzuschalten und zugleich
einen Druckentlastungskanal zu öffnen. Wenn der Verdichter
bei einem anderen als dem eingestellten Druck abgestellt wird,
erfolgt bei dieser bekannten Ausführung keine selbsttätige
Druckentlastung, so daß der Verdichter dann entweder erst
nach eigens durchgeführter Druckentlastung oder aber gegen
den vollen Gegendruck wieder angefahren werden kann. Weiterhin
ist nachteilig, daß der Druckschalter für jeden Betriebsdruck
neu justiert werden muß.

Der Erfindung liegt die Aufgabe zugrunde, die bisher
bekannten Anordnungen zur Druckentlastung von Verdichtern so zu verbessern, daß auch bei ungünstigen Betriebsverhältnissen keine Verschmutzung des Druckentlastungsvetils auftritt, dieses aber unabhängig vom jeweiligen Betriebsdruck die Druckentlastung bei jeder Unterbrechung der Förderung des Verdichters sicherstellt.

Die erfindungsgemäße Anordnung besteht darin, daß das Druckentlastungsventil einen durch eine auf beiden Seiten mit Druckmedium beaufschlagte Membran betätigten Verschlußkörper besitzt und die Membran auf ihren beiden Seiten von je einer Steuerkammer umgeben ist, von denen die Schließdruckkammer, deren Druck in Schließrichtung auf den Verschlußkörper wirkt, mit der in Förderrichtung vor dem Rückschlagventil liegenden Druckleitung und die Öffnungsdruckkammer, deren Druck in Öffnungsrichtung auf den Verschlußkörper wirkt, mit der in Förderrichtung hinter dem Rückschlagventil liegenden Druckleitung in Verbindung steht. Das erfindungsgemäß vorgesehene Druckentlastungsventil wird durch den bei der Förderung des Druckmittels am Rückschlagventil auftretenden Druckabfall gesteuert und ist so vom jeweiligen Enddruck des Verdichters unabhängig. Da es vom geförderten Medium nicht durchströmt wird, treten praktisch keine Verschmutzungen auf.

In weiterer Ausgestaltung der Erfindung kann in der Öffnungsdruckkammer eine in Öffnungsrichtung auf den Verschlußkörper wirkende Feder angeordnet sein. Das Druckentlastungsventil wird dann nicht nur durch den auf seinen Verschlußkörper wirkenden Druck des Druckmediums geöffnet,
sondern es ist eine druckunabhängige Öffnung durch die Feder
gewährleistet.

Bei einer bevorzugten Ausführungsform der Erfindung
ist das Druckentlastungsventil mit seinem Gehäuse an einem
in Förderrichtung hinter dem Rückschlagventil angeordneten
Druckmittelbehälter angebracht und steht die Schließdruckkammer über eine zum Entlastungskanal führende Druckentlastungsleitung mit der in Förderrichtung vor dem Rückschlagventil liegenden Druckleitung in Verbindung. Es ist hiebei
keine besondere Befestigung für das Druckentlastungsventil
erforderlich. Als Rückschlagventil kann jede beliebige bekannte Bauart verwendet werden, wobei für die Druckentlastung
lediglich eine Leitung geringen Querschnittes zwischen dem
Rückschlagventil und dem Druckentlastungsventil erforderlich
ist.

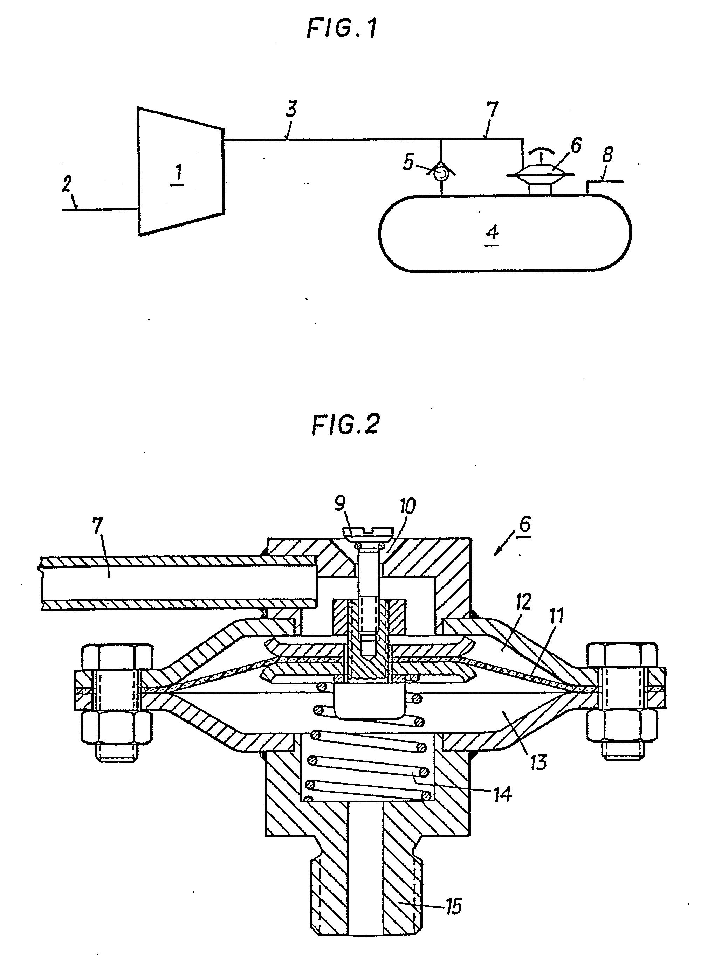

In der nachfolgenden Beschreibung ist die erfindungsgemäße Anordnung an Hand der Zeichnung näher erläutert. In
dieser zeigt Fig. 1 eine Verdichteranlage, die mit einer
erfindungsgemäßen Anordnung zur selbsttätigen Druckentlastung
ausgestattet ist, in schematischer Darstellung und Fig. 2
zeigt dazu einen axialen Mittelschnitt durch das Druckentlastungsventil.

Die in Fig. 1 dargestellte Verdichteranlage besteht
aus einem Verdichter 1, der das durch die Saugleitung 2 angesaugte Medium verdichtet und über die Druckleitung 3 in einen Druckmittelbehälter 4 fördert. In die Druckleitung 3 ist ein Rückschlagventil 5 eingebaut und in den Druckmittelbehälter ist ein Druckentlastungsventil 6 eingesetzt, von dem eine Druckentlastungsleitung 7 zu der in Förderrichtung vor dem Rückschlagventil 5 liegenden Druckleitung 3 führt. Mit 8 ist die Verbraucherleitung bezeichnet, die aus dem Druckmittelbehälter 4 ausgeht.

Das in Fig. 2 gezeigte Druckentlastungsventil 6 besitzt einen Verschlußkörper 9, der einen Entlastungskanal 10 steuert, der mit der Druckentlastungsleitung 7 in Verbindung steht. Für die Betätigung des Verschlußkörpers 9 ist eine Membran 11 vorgesehen, die auf ihren beiden Seiten von je einer Steuerkammer umgeben ist. Auf der dem Verschlußkörper 9 zugewendeten Seite begrenzt die Membran 11 eine Schließdruckkammer 12 und auf der gegenüberliegenden Seite begrenzt sie eine Öffnungsdruckkammer 13. Die Druckentlastungsleitung 7 mündet in die Schließdruckkammer 12, aus der der Entlastungskanal 10 nach außen führt. In die Öffnungsdruckkammer 13 ist eine Feder 14 eingebaut, die in Öffnungsrichtung des Verschlußkörpers 9 auf die Membran 11 wirkt. An der Unterseite des Gehäuses des Druckentlastungsventils 6 befindet sich ein Anschlußstutzen 15, mit welchem das Druckentlastungsventil 6 in den Druckmittelbehälter 4 eingeschraubt ist.

Das Druckentlastungsventil 6 ist zum Rückschlagventil 5 parallel geschaltet. Wenn der Verdichter 1 fördert, wirkt der am Rückschlagventil 5 auftretende Druckabfall auf die beiden Seiten der Membrane 11. Der Förderdruck gelangt
also aus der Druckleitung 3 über die Druckentlastungsleitung 7 in die Schließdruckkammer 12, wogegen in der
Öffnungsdruckkammer 13 der Druck im Druckmittelbehälter 4
herrscht, der aufgrund des Druckabfalls am Rückschlagventil 5
kleiner ist. Der Verschlußkörper 9 des Druckentlastungsventils 6 schließt daher den Entlastungskanal 10 gegen die
Kraft der Feder 14, die entsprechend bemessen sein muß.
Solange die Förderung anhält, ist der Druck in der Schließdruckkammer 12 höher als jener in der Öffnungsdruckkammer 13,
so daß das Druckentlastungsventil geschlossen bleibt. Wenn
aber die Förderung aufhört, schließt sich das Rückschlagventil 5, sobald in der Druckleitung 3 und im Druckmittelbehälter 4 der gleiche Druck herrscht. Aufgrund dieses Druckausgleiches zu beiden Seiten des Rückschlagventils 5 kommt
es auch zu einem Druckausgleich zwischen der Schließdruckkammer 12 und der Öffnungsdruckkammer 13. Die Feder 14 hebt
daher den Verschlußkörper 9 von seinem Sitz ab, so daß der
Entlastungskanal 10 geöffnet wird und der Verdichter 1 einschließlich der in Förderrichtung vor dem Rückschlagventil 5
liegenden Druckleitung 3 druckentlastet wird. Der Verdichter
kann dann jederzeit ohne Gegendruck anlaufen.


Patentansprüche:

P a t e n t a n s p r ü c h e  :

1. Anordnung zur selbsttätigen Druckentlastung von Verdichtern,
   die das verdichtete Medium über eine Druckleitung fördern,
   in die ein Rückschlagventil eingebaut ist, dem ein selbsttätiges Druckentlastungsventil zugeordnet ist, das beim
   Aufhören der Förderung die in Förderrichtung vor dem Rückschlagventil liegende Druckleitung mit einem Entlastungskanal verbindet, dadurch gekennzeichnet, daß das Druckentlastungsventil (6) einen durch eine auf beiden Seiten
   mit Druckmedium beaufschlagte Membran (11) betätigten
   Verschlußkörper (9) besitzt und die Membran (11) auf ihren
   beiden Seiten von je einer Steuerkammer umgeben ist, von
   denen die Schließdruckkammer (12), deren Druck in Schließrichtung auf den Verschlußkörper (9) wirkt, mit der in
   Förderrichtung vor dem Rückschlagventil (5) liegenden Druckleitung (3) und die Öffnungsdruckkammer (13), deren Druck
   in Öffnungsrichtung auf den Verschlußkörper (9) wirkt, mit
   der in Förderrichtung hinter dem Rückschlagventil (5)
   liegenden Druckleitung in Verbindung steht.

2. Anordnung nach Anspruch 1, dadurch gekennzeichnet, daß in
   der Öffnungsdruckkammer (13) eine in Öffnungsrichtung auf
   den Verschlußkörper (9) wirkende Feder (14) angeordnet ist.

3. Anordnung nach Anspruch 1 oder 2, dadurch gekennzeichnet,
   daß das Druckentlastungsventil (6) mit seinem Gehäuse am

einem in Förderrichtung hinter dem Rückschlagventil (5)

angeordneten Druckmittelbehälter (4) angebracht ist und

die Schließdruckkammer (12) über eine zum Entlastungskanal (10) führende Druckentlastungsleitung (7) mit der in Förderrichtung vor dem Rückschlagventil (5) liegenden Druckleitung (3) in Verbindung steht.

Wien, am 15. Mai 1981          HOERBIGER VENTILWERKE
                               AKTIENGESELLSCHAFT
                               in Wien

                               vertreten durch:

                               Dipl. Ing. A. Klein
                               Patentanwalt

FIG.1

FIG.2

| | | Nummer der Anmeldung |
|---|---|---|
| Europäisches Patentamt | **EUROPÄISCHER RECHERCHENBERICHT** | EP 81 89 0079 |

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 189 671 (DEUTSCHE VER-GASER)<br><br>* Seite 1, Zeile 32 - Seite 2, Zeile 25; Figur * | 1,2 |
| | -- | |
| | DE - A - 2 110 393 (SANDVOSS)<br><br>* Seite 6, Zeilen 8,9; Seite 8, Zeile 10 - Seite 9, Zeile 11; Figur * | 1,2 |
| | -- | |
| | DEUTSCHE NORMEN DIN 24300, Blatt 3, März 1966, Seite 8, Nr. 4.4 "Parallelgeschaltetes Stromregelventil" | 1,2 |
| | -- | |
| D | FR - A - 2 271 470 (HOERBIGER) | |
| A | FR - A - 1 269 301 (RENAULT) | |
| A | FR - A - 1 088 511 (SPECIALTIES DEVELOPMENT CORPORATION) | |
| | ---- | |

**KLASSIFIKATION DER ANMELDUNG (Int. Cl.³)**

F 04 B 49/02
F 16 K 31/365

**RECHERCHIERTE SACHGEBIETE (Int. Cl.³)**

F 04 B
F 16 K

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-07-1981 | BAATH |

EPA form 1503.1  06.78